# EUROPÄISCHE PATENTSCHRIFT

(11) **EP 1 862 410 B1**
(45) Veröffentlichungstag und Bekanntmachung des Hinweises auf die Patenterteilung: **07.09.2011**
(21) Anmeldenummer: 07008382.9
(22) Anmeldetag: 25.04.2007
(51) Int. Cl.: B65G 15/48, B65G 15/58, B65G 17/42, B65B 19/02, B65B 19/10

(54) **Vorrichtung zum Transport von Zigaretten**
Device for transporting cigarettes
Dispositif destiné au transport de cigarettes

(30) Priorität: 02.06.2006 DE 102006026289
(43) Veröffentlichungstag der Anmeldung: 05.12.2007
(73) Patentinhaber: Focke & Co. (GmbH & Co. KG), 27283 Verden (DE)
(72) Erfinder: Engel, Gisbert, 28308 Luttum (DE)
(74) Vertreter: Bolte, Erich

(56) Entgegenhaltungen:
- EP-A1- 0 668 214
- EP-A1- 1 063 182
- WO-A-02/100745
- US-A- 2 639 025

## Beschreibung

Die Erfindung betrifft eine Vorrichtung zum Transport von Gegenständen, insbesondere (Zigaretten-)Packungen, Zigarettengruppen (11) oder Packungsinhalt, mit
- ein Endlosband aufweisendem Endlosförderer, wobei das Endlosband quergerichtete Rundstäbe aufweist, und wobei die Rundstäbe jeweils ein zylindrisches Lagerstück aufweisen;
- Aufnahmen, insbesondere Taschen, zur Aufnahme der zu fördernden Gegenstände, wobei jede Aufnahme durch an einander gegenüberliegenden Seiten der Aufnahmen bzw. Taschen angebrachte Verbindungsstege mit dem Endlosband verbunden sind, und wobei die Verbindungsstege jeweils ein Gelenkauge bilden;
wobei die Gelenkaugen jeweils ein zylindrisches Lagerstück umgeben und bilden, über welche die Verbindungsstege schwenkbar mit dem Endlosband verbunden sind, so dass ein Bewegungsausgleich im Bereich von Umlenkungen des Endlosbandes erfolgt.

Für den kontinuierlichen oder taktweisen Transport von Gegenständen sind Endlosförderer mit Aufnahmen, Taschen oder dergleichen für die Gegenstände in verschiedenen Ausführungen bekannt. Die Aufnahmen bzw. Taschen sind Bestandteil eines formbaren, nämlich umlenkbaren endlosen Trägers, beispielsweise einer Förderkette, eines Zahnriemens oder dergleichen.

Ein derartiger Förderer auf der Grundlage eines Zahnriemens ist in EP 1 063 182 A1 beschrieben. Taschen für die Aufnahme einer Zigarettengruppe bestehen bei diesem Vorschlag aus einem starren Formstück. Die Tasche ist über Verbindungsstege an gegenüberliegenden Seiten mit quergerichteten Rundstäben verbunden, die wiederum ein zylindrisches Lagerstück aufweisen. Die Rundstäbe sind im Bereich von Zähnen des Zahnriemens in diesen eingebettet. Enden der Rundstäbe treten beidseitig in Führungen eines ortsfesten Trägers des Förderers ein.

Ein anderes Beispiel für eine Taschenkette zeigt EP 0 210 531.

Der Erfindung liegt die Aufgabe zugrunde, einen Förderer für insbesondere Zigaretten-Packungen oder -Gruppen so auszubilden, dass eine hohe Belastbarkeit und eine bessere Verschleißfestigkeit des Endlosförderers gegeben sind.

Diese Aufgabe wird durch die Vorrichtung des Anspruchs 1 gelöst, wobei das Endlosband als hochbelastbares Stahlband ausgebildet ist und Ausnehmungen aufweist, wobei die Ausnehmungen jeweils den Durchtritt eines Lagerstücks sowie eines Gelenkauges ermöglichen und die Gelenkaugen jeweils das Lagerstück im Bereich diesen Ausnehmungen umgeben.

Ein mit diesen Merkmalen ausgebildeter Endlosförderer ist hochbelastbar und deshalb für den Einsatz in leistungsfähigen Zigaretten-Verpackungsmaschinen geeignet. Die Herstellung, nämlich Montage ist einfach. Eine Anpassung der Taschen im Bereich von Umlenkungen ist gewährleistet.

Weitere Merkmale des Endlosförderers sind Gegenstand der Unteransprüche.

Ein Ausführungsbeispiel der erfindungsgemäßen Vorrichtung wird nachfolgend anhand der Zeichnungen näher erläutert. Es zeigt:
- Fig. 1: einen Teilbereich einer Verpackungsmaschine für Zigaretten in schematischer Seitenansicht,
- Fig. 2: einen Ausschnitt eines Taschen aufweisenden Endlosförderers in Seitenansicht bzw. im Querschnitt, bei vergrößertem Maßstab,
- Fig. 3: die Einzelheit gemäß Fig. 2 in Seitenansicht gemäß Pfeil III in Fig. 2,
- Fig. 4: die Einzelheit gemäß Fig. 2, nämlich eine Tasche mit Stahlband, Draufsicht gemäß Pfeil IV in Fig. 3,
- Fig. 5: eine Einzelheit des Details gemäß Fig. 4, nämlich eine Gelenkverbindung im Axialschnitt, nämlich in der Schnittebene V-V der Fig. 4 bei vergrößertem Maßstab,
- Fig. 6: einen Ausschnitt der Umlenkung und Führung eines Endlosförderers gemäß VI in Fig. 1, bei vergrößertem Maßstab,
- Fig. 7: einen Radialschnitt im Bereich der Einzelheit der Fig. 6 in der Schnittebene VII-VII,
- Fig. 8: eine Darstellung analog Fig. 6 für ein anderes Ausführungsbeispiel zur Umlenkung und Führung eines Gurts,
- Fig. 9: einen Querschnitt zu Fig. 8 in der Schnittebene IX-IX,
- Fig. 10: eine Einzelheit der Fig. 1, nämlich Bereich einer Umlenkwalze entsprechend Ausschnitt X in Fig. 1, bei vergrößertem Maßstab,
- Fig. 11: einen Ausschnitt eines Faltrevolvers, nämlich einen Querschnitt eines Details gemäß XI in Fig. 1, bei vergrößertem Maßstab,
- Fig. 12: einen Quer- bzw. Radialschnitt zu der Einzelheit gemäß Fig. 11 in einer Schnittebene XII-XII der Fig. 11.

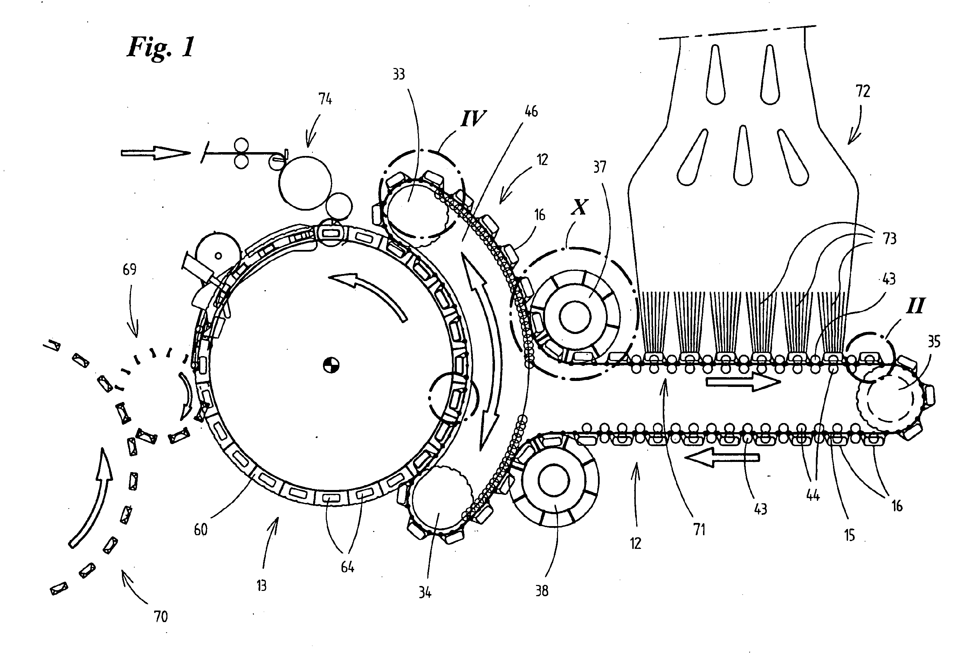

Die in den Zeichnungen dargestellten Ausführungsbeispiele befassen sich mit der Handhabung von Zigaretten 10, nämlich mit dem Transport von Zigarettengruppen 11. Diese werden durch einen besonderen Förderer, und zwar durch einen Bandförderer 12, einer Verarbeitungsstation zugeführt. Fig. 1 ist ein Ausschnitt einer Verpackungsmaschine. Die Zigarettengruppen 11 werden einem Faltrevolver 13 zugeführt, in dessen Bereich die Zigarettengruppe 11 in mindestens einem Zuschnitt 14 eingehüllt wird.

Der Bandförderer 12 besteht aus einem dünnen, hochbelastbaren flachen, also profillosen Band, insbesondere aus Federstahl, also aus einem dünnen Stahlband 15. Dieses hat eine Dicke von deutlich weniger als 1 mm, insbesondere eine Dicke von etwa 0,3 mm bis 0,5 mm. Das Stahlband 15 ist Träger für an einer Seite desselben angeordnete Aufnahmen oder Taschen 16 für je eine Zigarettengruppe 11. Die Taschen 16 sind als im Querschnitt geschlossene hülsenförmige Hohlkörper ausgebildet mit einer ringsherum laufenden, geschlossenen Taschenwand 17. Diese ist quer zum Stahlband 15 gerichtet und an beiden Enden offen. Die Zigarettengruppe 11 ist passend in der Tasche 16 angeordnet, wobei die Taschenwand 17 gerundete Kanten bildet unter Anpassung an die Kontur von eckseitigen Zigaretten 10.

Die Tasche 16 ist mit einem Abstand von dem Stahlband 15 angeordnet bzw. mit diesem verbunden. Hierzu dienen besondere Halte- bzw. Verbindungsorgane, die insbesondere an quer zum Stahlband 15 gerichteten Seitenwänden 18, 19 der Tasche 16 angebracht sind. An der einen Seite, zum Beispiel an der in Transportrichtung vorn liegenden Seitenwand 19, dienen (zwei) fest mit der Tasche 16 verbundene, starre Verbindungsstege 20, 21 zur Befestigung dieses Teils der Tasche 16 am Stahlband 15. Gegenüberliegend, nämlich im Bereich der Seitenwand 18, sind verformbare Verbindungsmittel vorgesehen, nämlich ein elastischer Steg in der Ausführung als Blattfeder 22.

Beide Verbindungsmittel 20, 21 einerseits und 22 andererseits, sind schwenkbar mit dem Stahlband 15 verbunden, nämlich über Gelenke 23 einerseits und 24 andererseits. Die Verbindungsstege 20, 21 bilden jeweils ein Gelenkauge 25. An der Blattfeder 22 sind Gelenkstücke angebracht, die ebenfalls zwei in quer gerichtetem Abstand voneinander gebildete Gelenkaugen 26 aufweisen. Die Gelenkaugen 25, 26 umfassen runde bzw. zylindrische Lagerstücke 27, die an passender Stelle mit dem Stahlband 15 verbunden sind. Durch die Ausbildung der Befestigungsorgane 20, 21, 22 und durch die gelenkige Verbindung mit dem Stahlband 15 können die Taschen 16 im Bereich von Umlenkungen des Bandförderers 12 zwängungsfrei den Verformungen folgen.

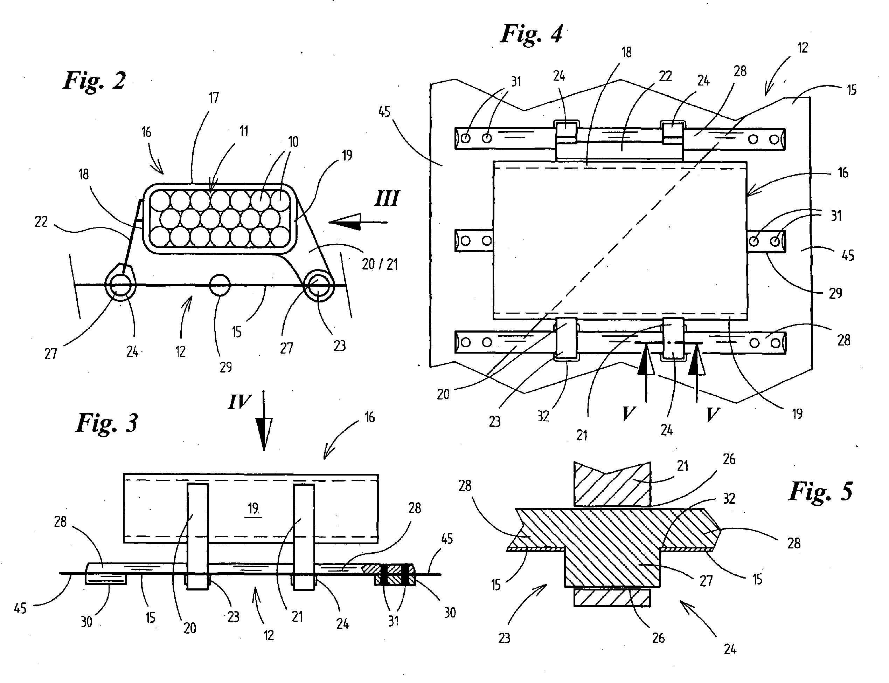

Für die Verbindung der Taschen 16 oder anderer Organe mit dem Stahlband 15 werden quer gerichtete Rundstäbe 28, 29 eingesetzt, die mit dem Stahlband 15 verbunden sind. Vorteilhaft erstrecken sich die Rundstäbe 28, 29 bis auf freie Randbereiche über die volle Breite des Stahlbands 15 (Fig. 3, Fig. 4). Die Rundstäbe 28, 29 sind mittig getrennt. Ein halber Rundstab 28 erstreckt sich an der den Taschen 16 zugekehrten Seite. Auf der gegenüberliegenden Seite kann ein ebenfalls durchgehender halber Rundstab angebracht und mit dem Stahlband 15 verbunden sein. Bei dem vorliegenden Beispiel sind lediglich Stababschnitte 30 im Endbereich der (halben) Rundstäbe 28, 29 angeordnet und mit dem Stahlband 15 sowie dem Endbereich des Rundstabs 28, 29 verbunden, und zwar mittels quer gerichteter Verbindungsmittel, wie Bolzen, Nieten 31 oder dergleichen.

Die Rundstäbe 28, 29 bewirken eine Stabilisierung des Stahlbands 15 in Querrichtung. Darüber hinaus dienen sie (Rundstäbe 28) zur Befestigung von Taschen 16 und anderen Organen. Schließlich können im Bereich der Rundstäbe 28, 29 Antriebskräfte, Führungskräfte etc. auf das Band übertragen werden. Die Rundstäbe 28 dienen zur Bildung der Gelenke 23, 24 für die Taschen 16. Im Bereich der Gelenke 23, 24 bzw. der Gelenkaugen 25, 26 sind die Rundstäbe 28 mit (rundem) Vollquerschnitt ausgebildet, so dass ein entsprechender, zylindrischer Abschnitt des Rundstabs 28 das Lagerstück 27 (Fig. 5) für die Gelenkaugen 25, 26 bildet. An dieser Stelle ist das Stahlband 15 mit einer (rechteckigen) Ausnehmung 32 versehen, die den Durchtritt des Lagerstücks 27 sowie der Gelenkaugen 25, 26 ermöglicht. Die Taschen 16 sind demnach mittelbar, nämlich über die Rundstäbe 28 bzw. die Lagerstücke 27 mit dem Stahlband 15 verbunden.

Die Umlenkung des Bandförderers 12 mit einseitig angeordneten Taschen 16 ist in besonderer Weise gelöst. Bei Umlenkrädern 33, 34, 35, bei denen die Taschen 16 an der freien Außenseite liegen, weisen die Umlenkräder 33 ... 35 am Umfang offene achsparallele Nuten 36 auf, in die die quer gerichteten Stäbe an der Innenseite des Stahlbands 15, nämlich die Stababschnitte 30, passend eintreten. Die Mehrzahl der im Bereich einer Umlenkung an dem Umlenkrad 33 ... 35 in entsprechend ausgebildeten Nuten 36 anliegenden Vorsprünge des Bandförderers 12 bewirkt eine Justierung der Position des Bandförderers 12. Des Weiteren kann in diesem Bereich Antrieb auf den Bandförderer 12 übertragen werden, insbesondere durch das Umlenkrad 35. Bei dem vorliegenden Ausführungsbeispiel, nämlich der in Fig. 1 gezeigten Vorrichtung mit Faltrevolver 13, wird der Antrieb des Bandförderers 12 durch den Faltrevolver 13 bewirkt.

In besonderer Weise ist die Umlenkung des Bandförderers 12 im Bereich von Umlenkwalzen 37, 38 gelöst, die auf der Seite der Taschen 16 oder dergleichen angeordnet sind. Die Umlenkwalzen 37, 38 sind so ausgebildet, dass der Gurt bzw. das Stahlband 15 an Umfangsbereichen der Umlenkwalzen 37, 38 anliegt. Die Umlenkorgane weisen Vertiefungen 39 auf, in die die Taschen 16 während der Anlage des Bandförderers 12 vollständig eintreten. Die Umlenkwalzen 37, 38 sind vorzugsweise so ausgebildet, dass die Vertiefungen 39 in regelmäßigen Abständen voneinander angeordnet sind. Die exakte Position der Taschen 16 im Bezug auf die Vertiefungen 39 wird durch die Nuten 36 bewirkt, in die die Rundstäbe 28, 29 eintreten. Die Nuten 36 sind im Bereich von Seitenwänden 40 zu beiden Seiten der Umlenkwalzen 37, 38 gebildet, die seitliche Begrenzungen nach Art von Seitenwangen sind. Quergerichtete Radialwände 41 begrenzen die Vertiefung 39 in Umfangsrichtung. Eine ringsherum laufende, kreis- bzw. ringförmige Innenwand 42 bildet die radiale Innenbegrenzung der Vertiefungen 39. Das Stahlband 15 liegt an den kreisförmigen Seitenwänden 14, aber auch an den Radialwänden 41 an.

Außerhalb des Bereichs von Umlenkrädern 33 .. 35 bzw. Umlenkwalzen 37, 38, insbesondere im Bereich geradliniger bzw. ebener Bewegungsabschnitte des Bandförderers 12, ist das Stahlband 15 durch Rollen abgestützt, und zwar durch Paare von Stützrollen 43, 44, die einander gegenüberliegend zu beiden Seiten des Stahlbands 15 gelagert sind. Die Stützrollen 43, 44 sind außerhalb des Bereichs der Taschen 16 und/oder außerhalb des Bereichs der Rundstäbe 28, 29 wirksam, nämlich jeweils seitlich im Bereich von freien Bandstreifen 45.

Eine Besonderheit ist die Abstützung bzw. Führung des Bandförderers 12 im Bereich bogenförmiger bzw. gewölbter Bewegungsabschnitte. Gemäß Fig. 1 läuft der Bandförderer 12 über ein Ausgleichssegment 46, welches den Faltrevolver 13 am Außenumfang in einem Teilbereich umschließt. Das Ausgleichssegment 46 ist entsprechend Doppeltpfeil relativ zum Faltrevolver 13 entlang einer bogenförmigen Bahn hin- und herbewegbar. Entlang bogenförmiger Außenschenkel des Ausgleichssegments 46 ist der Bandförderer 12 zwischen Umlenkrad 33 und Umlenkwalze 37 einerseits sowie zwischen Umlenkrad 34 und Umlenkwalze 38 andererseits bogenförmig abgestützt.

An dem Ausgleichssegment 46 sind an (mehreren parallelen) Tragwänden 47 Führungsrollen 48, 49 gelagert, an denen das Stahlband 15 anliegt. Die Führungsrollen 48, 49 sind in Bewegungsrichtung des Stahlbands 15 und quer zu diesem verteilt angeordnet, so dass eine dichte Verteilung gegeben ist. Jeweils eine Anzahl von Führungsrollen 48 einerseits und 49 andererseits ist axial ausgerichtet und in Bewegungsrichtung mit wechselseitiger Überdeckung sowie axialem Versatz gelagert.

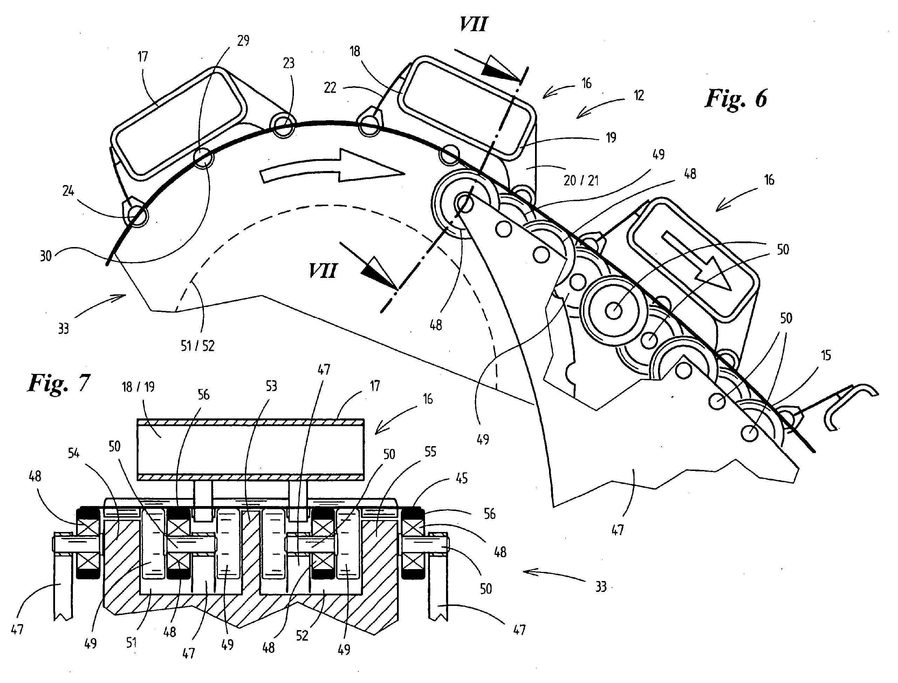

Jede Führungsrolle 48, 49 ist bei diesem Ausführungsbeispiel individuell über eine Achse 50 an einer segmentartigen Tragwand 47 gelagert. Jeweils vier nebeneinander liegende Führungsrollen 48 bzw. 49 sind an (vier) parallelen Tragwänden 47 gelagert. Diese erstrecken sich bis in den Umfangsbereichs des Umlenkrades 33, das entsprechende ringsherum laufende Ausnehmungen bzw. Kanäle 51, 52 aufweist. Gezeigt ist eine Ausführung mit zwei parallelen Kanälen 51, 52, die durch einen mittigen Steg 53 und seitliche Stützwände 54, 55 begrenzt sind. Die an der Innenseite gebildeten Stababschnitte 30 sind im Bereich der seitlichen Stützwände 54, 55 angeordnet. Die Taschen 16 bzw. deren Verbindungsstege 20, 21 sowie Gelenke 23, 24 sind so positioniert, dass sie jeweils zwischen benachbarten Führungsrollen 48, 49 liegen (Fig. 7). Die Führungsrollen 48, 49 erstrecken sich über die volle Länge der Anlage des Bandförderers 12 an dem Ausgleichssegment 46. Die Führungsrollen 48, 49 sind mit einer verformbaren bzw. elastischen Außenbeschichtung 56 versehen, insbesondere aus Gummi.

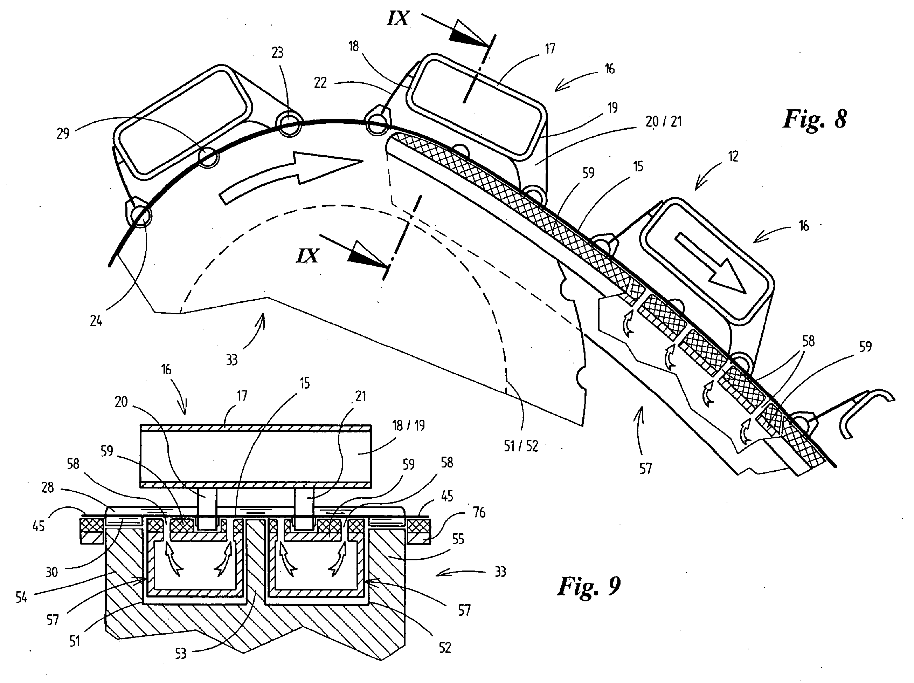

Eine Alternative zu den Führungsrollen 48, 49 als Stützmittel für den Bandförderer 12 im Bereich eines bogenförmigen Förderabschnitts ist in Fig. 8, Fig. 9 gezeigt. Ein Stützsegment 57 ist als Hohlkörper ausgebildet und an eine Druckluftquelle angeschlossen. Innerhalb der (zwei) langgestreckten, kastenförmigen Stützsegmente 57 wird Druck erzeugt, der auf einer dem Bandförderer 12 bzw. dem Stahlband 15 zugekehrten Seite über Bohrungen 58 austritt. Das Stahlband 15 wird so auf einem Luftkissen bewegt. Die dem Stahlband 15 zugekehrte Seite der Stützsegmente 57 bzw. eine Außenwand 59 ist Außen mit einer elastischen Beschichtung 59 versehen, insbesondere aus Gummi oder Kunststoff (Teflon). Die Stützsegmente 57 erstrecken sich bis in die Kanäle 51, 52 des Umlenkrades 33 im Bereich des Übergangs des Bandförderers 12 vom Umfang des Umlenkrades zum Ausgleichssegment 46.

Die axiale Abmessung der Umlenkräder 33 .. 35 ist etwas geringer als die Breite des Stahlbands 15, so dass Bandstreifen 45 als seitlicher Überstand frei liegen. Mindestens an den Umlenkwalzen 33 und 34 sind seitliche Abstützungen des Stahlbands 15 neben den Umlenkwalzen 33, 34 angeordnet, nämlich bei dem Ausführungsbeispiel gemäß Fig. 6, Fig. 7 jeweils eine weitere Führungsrolle 48 und bei dem Ausführungsbeispiel gemäß Fig. 8, Fig. 9 einen randseitiger Stützsteg 76.

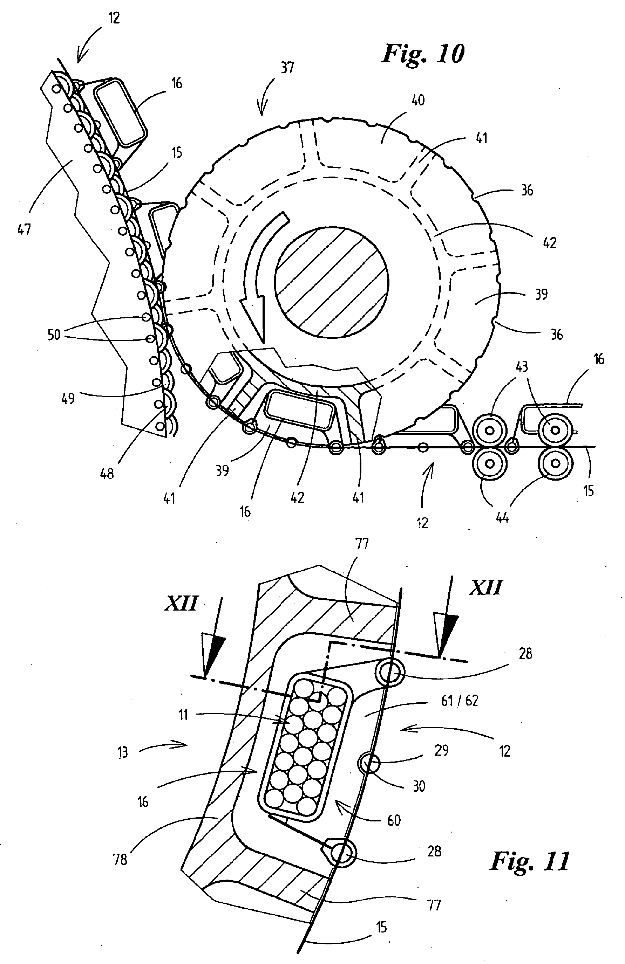

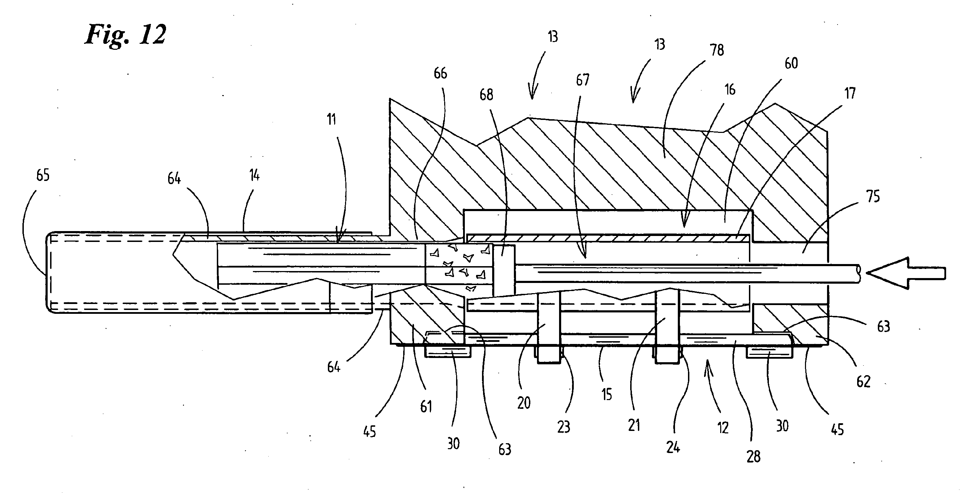

Eine weitere Besonderheit ist die Ausbildung des Faltrevolvers 13 in Verbindung mit einem Bandförderer 12, der lediglich an einer Seite des Gurts Aufnahmen bzw. Taschen 16 aufweist. Der Faltrevolver 13 (Fig. 11/Fig. 12) ist mit einem ringsherum sich erstreckenden Aufnahmekanal bzw. mit einer Folge von Aufnahmekammern 60 versehen. Diese sind an der äußeren Umfangsfläche des Faltrevolvers 13 offen, seitlich durch Randborde 61, 62 als Seitenbegrenzung des Faltrevolvers 13 und in Umfangsrichtung durch Querwände 77 begrenzt. An der radial innenliegenden Seite erstreckt sich eine kreisförmige Bodenwand 78 über alle Aufnahmekammern 60. Diese sind hinsichtlich der Abmessungen an die Abmessungen einer Tasche 16 angepasst, so dass bei entsprechender Anlage des Bandförderers 12 am Faltrevolver 13 (Fig. 11) jeweils eine Tasche 16 in einer Kammer 60 Aufnahme findet. Im prinzipiellen Aufbau entspricht demnach der Faltrevolver 13 den Umlenkwalzen 37, 38.

Das Stahlband 15 liegt an den Randborden 61, 62 des Faltrevolvers 13 an. Diese sind mit Vertiefungen 63 versehen, in die Endbereiche der Rundstäbe 28, 29 passend eintreten. Die seitlichen Bandstreifen 45 liegen an freien Randbereichen der Randborde 61, 62 an. Im Bereich der Anlage des Bandförderers 12 am Faltrevolver 13 sind die Aufnahmekammern 60 durch das Stahlband 15 nach außen abgedeckt.

Der Bandförderer 12 wird zur Übergabe des Inhalts der Taschen 16, insbesondere der Zigarettengruppen 11 an den Faltrevolver 13 in einer Relativstellung um den Faltrevolver 13 herumgeführt, bei der die Taschen 16 jeweils in einer Aufnahmekammer 60 liegen. Die Zigarettengruppen 11 werden an eine Aufnahme des Faltrevolvers 13 übertragen, nämlich an einen Faltdorn 64. Es handelt sich dabei um einen im Querschnitt rechteckigen, dünnwandigen Hohlkörper, der im Inneren die Zigarettengruppe 11 aufnimmt. Auf der Außenseite werden Zuschnitte 14 gefaltet, und zwar unter Bildung einer becherförmigen Teilpackung mit einer Bodenwand 65 an der offenen Seite des Faltdorns 64.

An dem Faltrevolver 13 sind Faltdorne 64 längs des Umfangs seitlich angeordnet, und zwar an dem Randbord 61. Die Relativstellung der Faltdorne 64 ist auf die Teilung des Bandförderers 12, nämlich auf die Positionen der Taschen 16 ausgerichtet. Jede Tasche 16 ist auf einen zugeordneten Faltdorn 64 ausgerichtet. Die seitliche Begrenzung der Kammer 60, nämlich der Randbord 61, ist mit einer durchgehenden Öffnung 66 versehen, die in der Relativstellung und in den Abmessungen auf den Faltdorn 64 ausgerichtet ist. Ein achsparallel bewegbarer Schieber 67 ist aus einer seitlichen Ausgangsstellung im Bereich des Randbords 62 mit einem Schieberkopf 68 unter Mitnahme der Zigarettengruppe 11 durch die Tasche 16 hindurchbewegbar, wobei die Zigarettengruppe 11 durch die Öffnung 66 hindurch in den Faltdorn 64 gelangt. Bei fortgesetzter Ausschubbewegung des Schiebers 67 wird die Zigarettengruppe 11 durch den Faltdorn 64 hindurchgeschoben unter Mitnahme des an der Außenseite angeordneten becherförmigen Zuschnitt 14. Die Einheit aus Zigarettengruppe 11 und Zuschnitt 14 wird an einen Zwischenrevolver 69 und von diesem an einen weiteren Bearbeitungsrevolver 70 übergeben. Die Öffnung 66 in einer Seitenwand der Aufnahmekammer 60 bzw. in dem Randbord 61 ist auf der der Tasche 16 zugekehrten Seite mit einem trichterförmigen Eintrittsbereich versehen. Gegenüberliegend, nämlich im Bereich des Randbords 61, ist eine Durchtrittsöffnung 75 für den Schieber 67 angebracht. Bei kontinuierlicher Drehbewegung des Faltrevolvers 13 ist jedem Faltdorn 64 ein mit dem Faltrevolver 13 umlaufender Schieber 67 zugeordnet.

Die beschriebene Vorrichtung insbesondere der Bandförderer 12, ist für die Verpackung der Zigaretten 10 besonders geeignet. Bei der Vorrichtung gemäß Fig. 1 ist oberhalb eines horizontalen Förderabschnitts 71 ein Zigarettenmagazin 72 angeordnet. Aus unteren Schachtgruppen 73 werden die Zigarettengruppen 11 ausgeschoben und in jeweils eine benachbarte Tasche 16 des Bandförderers 12 eingeführt. Die mit den Zigarettengruppen 11 gefüllten Taschen 16 werden um das Umlenkrad 35 herumgeführt und gelangen in den Bereich des Ausgleichssegments 46. Dieses ist so angeordnet und ausgebildet, dass der Taktantrieb des Bandförderers 12 im Bereich des Zigarettenmagazins 72 in eine kontinuierliche, auf den Faltrevolver 13 abgestimmte Bewegung des anliegenden Bereichs des Bandförderers 12 umgewandelt wird. Benachbart zum Ausgleichssegment 46 ist oberhalb des Faltrevolvers 13 eine Zuschnittstation 74 bekannter Bauart angeordnet zur Zuführung der Zuschnitte 14 zu den seitlich angebrachten Faltdornen 64.

### Bezugszeichenliste:

- 10: Zigarette 45 Bandstreifen
- 11: Zigarettengruppe 46 Ausgleichssegment
- 12: Bandförderer 47 Tragwand
- 13: Faltrevolver 48 Führungsrolle
- 14: Zuschnitt 49 Führungsrolle
- 15: Stahlband 50 Achse
- 16: Tasche 51 Kanal
- 17: Taschenwand 52 Kanal
- 18: Seitenwand 53 Steg
- 19: Seitenwand 54 Stützwand
- 20: Verbindungssteg 55 Stützwand
- 21: Verbindungssteg 56 Außenbeschichtung
- 22: Blattfeder 57 Stützsegment
- 23: Gelenk 58 Bohrung
- 24: Gelenk 59 Beschichtung
- 25: Gelenkauge 60 Aufnahmekammer
- 26: Gelenkauge 61 Randbord
- 27: Lagerstück 62 Randbord
- 28: Rundstab 63 Vertiefung
- 29: Rundstab 64 Faltdorn
- 30: Stababschnitt 65 Bodenwand
- 31: Niete 66 Öffnung
- 32: Ausnehmung 67 Schieber
- 33: Umlenkrad 68 Schieberkopf
- 34: Umlenkrad 69 Zwischenrevolver
- 35: Umlenkrad 70 Bearbeitungsrevolver
- 36: Nut 71 Förderabschnitt
- 37: Umlenkwalze 72 Zigarettenmagazin
- 38: Umlenkwalze 73 Schachtgruppe
- 39: Vertiefung 74 Zuschnittstation
- 40: Seitenwand 75 Durchtrittsöffnung
- 41: Radialwand 76 Stützsteg
- 42: Innenwand 77 Querwand
- 43: Stützrolle 78 Bodenwand
- 44: Stützrolle
- 45: Bandstreifen
- 46: Ausgleichssegment
- 47: Tragwand
- 48: Führungsrolle
- 49: Führungsrolle
- 50: Achse
- 51: Kanal
- 52: Kanal
- 53: Steg
- 54: Stützwand
- 55: Stützwand
- 56: Außenbeschichtung
- 57: Stützsegment
- 58: Bohrung
- 59: Beschichtung
- 60: Aufnahmekammer
- 61: Randbord
- 62: Randbord
- 63: Vertiefung
- 64: Faltdorn
- 65: Bodenwand
- 66: Öffning
- 67: Schieber
- 68: Schieberkopf
- 69: Zwischenrevolver
- 70: Bearbeitungsrevolver
- 71: Förderabschnitt
- 72: Zigarettenmagazin
- 73: Schachtgruppe
- 74: Zuschnittstation
- 75: Durchtrittsöffnung
- 76: Stützteg
- 77: Querwand
- 78: Bodenwand

## Patentansprüche

1. Vorrichtung zum Transport von Gegenständen, insbesondere (Zigaretten-)Packungen, Zigarettengruppen (11) oder Packungsinhalt, mit
- ein Endlosband (15) aufweisendem Endlosförderer (12), wobei das Endlosband (15) quergerichtete Rundstäbe (28, 29) aufweist, und wobei die Rundstäbe (28, 29) jeweils ein zylindrisches Lagerstück (27) aufweisen;
- Aufnahmen (16), insbesondere Taschen, zur Aufnahme der zu fördernden Gegenstände (11), wobei jede Aufnahme (16) durch an einander gegenüberliegenden Seiten der Aufnahmen (16) bzw. Taschen angebrachte Verbindungsstege (19-21) mit dem Endlosband (15) verbunden sind, und wobei die Verbindungsstege (19-21) jeweils ein Gelenkauge (25, 26) bilden;
wobei die Gelenkaugen (25, 26) jeweils ein zylindrisches Lagerstück (27) umgeben und Gelenke (23, 24) bilden, über welche die Verbindungsstege (19-21) schwenkbar mit dem Endlosband (15) verbunden sind, so dass ein Bewegungsausgleich im Bereich von Umlenkungen des Endlosbandes (15) erfolgt,
**dadurch gekennzeichnet, dass** das Endlosband (15) als hochbelastbares Stahlband ausgebildet ist und Ausnehmungen (32) aufweist, wobei die Ausnehmungen (32) jeweils den Durchtritt eines Lagerstücks (27) sowie eines Gelenkauges (25, 26) ermöglichen und die Gelenkaugen (25, 26) jeweils das Lagerstück (27) im Bereich diesen Ausnehmungen (32) umgeben.

2. Vorrichtung nach Anspruch 1, **dadurch gekennzeichnet, dass** die Rundstäbe (28, 29) im Bereich von Umlenkrädern (33, 34, 35) oder Umlenkwalzen (37, 38) oder im Bereich eines Faltrevolvers (13) in entsprechende Ausnehmungen am Umfang des jeweiligen Umlenkungsorgans eintreten.

3. Vorrichtung nach Anspruch 2, **dadurch gekennzeichnet, dass** die Rundstäbe (28, 29) als halbe Rundstäbe (28, 29) ausgebildet sind, die jeweils einander gegenüberliegend zu beiden Seiten des Stahlbands (15) angeordnet und mit diesem verbunden sind, insbesondere durch quergerichtete Nieten (31), Bolzen oder dergleichen.

4. Vorrichtung nach Anspruch 3, **dadurch gekennzeichnet, dass** insbesondere auf der von den Taschen (16) abliegenden Seite des Stahlbands (15) lediglich Stababschnitte (30) an randseitigen Bereichen des Stahlbands (15) angeordnet und vorzugsweise mit gegenüberliegenden halben Rundstäben (28, 29) verbunden sind.

5. Vorrichtung nach Anspruch 1, **dadurch gekennzeichnet, dass** jede Tasche (16) mit unterschiedlich ausgebildeten Verbindungsstegen am Stahlband (15) befestigt ist, insbesondere im Bereich einer Seitenwand (19) der Tasche (16) mit zwei im Abstand voneinander angeordneten Verbindungsstegen (20, 21) einerseits und einem gegenüberlegend an der Seitenwand (18) der Tasche (16) angebrachten verformbaren Verbindungssteg, insbesondere einer Blattfeder (22) andererseits.

## Claims

1. Apparatus for transporting articles, in particular (cigarette) packs, cigarette groups (11) or pack contents, having
- an endless conveyor (12) with an endless belt (15), wherein the endless belt (15) has transversely directed round bars (28, 29), and wherein the round bars (28, 29) each have a cylindrical bearing piece (27);
- holders (16), in particular pockets, for accommodating the articles (11) which are to be conveyed, wherein each holder (16) is connected to the endless belt (15) by connecting crosspieces (19-21) fitted on mutually opposite sides of the holders (16) or pockets, and wherein the connecting crosspieces (19-21) each form an articulation eyelet (25, 26); wherein the articulation eyelets (25, 26) each enclose a cylindrical bearing piece (27) and form articulations (23, 24), via which the connecting crosspieces (19-21) are connected in a pivotable manner to the endless belt (15), and this therefore results in movement compensation in the region where the endless belt (15) is deflected,
**characterized in that** the endless belt (15) is designed as a steel belt which can be subjected to high levels of loading and has apertures (32), wherein the apertures (32) each allow the through-passage of a bearing piece (27) and of an articulation eyelet (25, 26), and the articulation eyelets (25, 26) each enclose the bearing piece (27) in the region of these apertures (32).

2. Apparatus according to Claim 1, **characterized in that** the round bars (28, 29), in the region of deflecting wheels (33, 34, 35) or deflecting rollers (37, 38) or in the region of a folding turret (13), enter into corresponding apertures on the circumference of the respective deflecting mechanism.

3. Apparatus according to Claim 2, **characterized in that** the round bars (28, 29) are designed as half-round bars (28, 29) which are each arranged opposite to one another on either side of the steel belt (15) and are connected thereto, in particular by transversely directed rivets (31), bolts or the like.

4. Apparatus according to Claim 3, **characterized in that**, in particular on that side of the steel belt (15) which is remote from the pockets (16), merely bar portions (30) are arranged on peripheral regions of the steel belt (15) and are connected preferably to half-round bars (28, 29) located opposite.

5. Apparatus according to Claim 1, **characterized in that** each pocket (16) is fastened on the steel belt (15) by connecting crosspieces of different designs, in particular in the region of a side wall (19) of the pocket (16) by two spaced-apart connecting crosspieces (20, 21), on the one hand, and by a deformable connecting crosspiece, in particular leaf spring (22), which is fitted opposite, on the side wall (18) of the pocket (16), on the other hand.

## Revendications

1. Dispositif pour le transport d'objets, en particulier de paquets (de cigarettes), de groupes de cigarettes (11) ou de contenu de paquets, comprenant :
- un transporteur sans fin (12) présentant une bande sans fin (15), la bande sans fin (15) présentant des barres rondes (28, 29) orientées transversalement, et les barres rondes (28, 29) présentant à chaque fois un élément de palier cylindrique (27);
- des logements (16), en particulier des poches, pour recevoir les objets à transporter (11), chaque logement (16) étant connecté par des nervures de liaison (19-21) réalisées sur des côtés mutuellement opposés des logements (16) ou des poches à la bande sans fin (15), et les nervures de liaison (19-21) formant à chaque fois un oeillet d'articulation (25, 26) ;
les oeillets d'articulation (25, 26) entourant à chaque fois un élément de palier cylindrique (27) et formant des articulations (23, 24), par le biais desquelles les nervures de liaison (19-21) sont connectées de manière pivotante à la bande sans fin (15), de telle sorte qu'une compensation du mouvement ait lieu dans la région de renvois de la bande sans fin (15),
**caractérisé en ce que** la bande sans fin (15) est réalisée sous forme de bande d'acier hautement sollicitable, et présente des évidements (32), les évidements (32) permettant à chaque fois le passage d'un élément de palier (27) ainsi que d'un oeillet d'articulation (25, 26) et les oeillets d'articulation (25, 26) entourant à chaque fois l'élément de palier (27) dans la région de ces évidements (32).

2. Dispositif selon la revendication 1, **caractérisé en ce que** les barres rondes (28, 29), dans la région de roues de renvoi (33, 34, 35) ou de rouleaux de renvoi (37, 38) ou dans la région d'une tourelle de pliage (13), entrent dans des évidements correspondants à la périphérie de l'organe de renvoi respectif.

3. Dispositif selon la revendication 2, **caractérisé en ce que** les barres rondes (28, 29) sont réalisées sous forme de demi-barres rondes (28, 29), qui sont disposées à chaque fois de manière opposée les unes aux autres des deux côtés de la bande d'acier (15) et qui sont connectées à celle-ci, notamment par des rivets (31) orientés transversalement, des boulons, ou similaires.

4. Dispositif selon la revendication 3, **caractérisé en ce que** notamment du côté de la bande d'acier (15) éloigné des poches (16), seulement des portions de barre (30) sont disposées sur des régions de la bande d'acier (15) du côté du bord, et sont de préférence connectées à des demi-barres rondes opposées (28, 29).

5. Dispositif selon la revendication 1, **caractérisé en ce que** chaque poche (16) est fixée par des nervures de liaison réalisées différemment sur la bande d'acier (15), notamment dans la région d'une paroi latérale (19) de la poche (16), avec deux nervures de liaison (20, 21) disposées à distance l'une de l'autre d'une part, et avec une nervure de liaison déformable réalisée du côté opposé sur la paroi latérale (18) de la poche (16), notamment un ressort à lame (22), d'autre part.
